# EUROPEAN PATENT APPLICATION

(11) **EP 2 854 357 A1**
(43) Date of publication of application: **01.04.2015**
(21) Application number: 13306349.5
(22) Date of filing: 30.09.2013
(51) Int. Cl.: H04L 29/06, H04L 29/08, H04W 88/06

(54) **Method for connecting a first host and a second host within at least one communication network through a relay module, corresponding relay module**

(71) Applicant: Thomson Licensing, 92130 Issy-les-Moulineaux (FR)
(72) Inventor: Le Bolzer, Françoise, 35576 Cesson Sévigné (FR); Gouache, Stéphane, 35576 Cesson Sévigné (FR); Montalvo, Luis, 35576 Cesson Sévigné (FR)
(74) Representative: Huchet, Anne

(57) **Abstract**

The invention concerns a relay module (R) comprising a capturing module (CM) for intercepting a first connection establishment request sent by a first host (H1); a communication module (I1) configured for sending a second connection establishment request to establish an initial auxiliary connection between the relay module (R) and a second host (H2) and for receiving, from said second host (H2), a first acknowledgment response and a context discovery unit (3) configured for activating:
- a forward mode to handle the traffic carried by the established main connection, in case the first connection establishment request and the first acknowledgment response present the same multipath property ;
- a relay mode to handle the traffic carried by:
■ an additional auxiliary connection established between the first host (H1) and the relay module (R); and
■ the initial auxiliary connection established between the relay module (R) and the second host (H2),
in case the first connection establishment request and the first acknowledgment response present different multipath properties.

## Description

### FIELD OF THE INVENTION

The present invention relates generally to the transmission of data packets between a first and a second hosts through one or more communication networks and in particular - but not exclusively - to a method and a relay module for connecting a multi-homed and multipath protocol capable host and a single path protocol host across at least one communication network through a relay module.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Nowadays, multimedia and data services use diverse communication paths (as for example satellite, cable, ADSL, 3G and 4G, WiFi, etc.). To take advantage of such various communication paths available, most of the recent devices include several radio interfaces. In particular, the new generation of mobile devices such as laptops, smartphones and tablets are commonly equipped with WiFi, 3G and Bluetooth interfaces.

However, multimedia services are usually implemented with the Transmission Control Protocol (shortly TCP) as the transport protocol which only uses a single communication path for each connection between two devices. As a consequence, multimedia services cannot take advantage of the available communication path diversity provided by the multiple interfaces of mobile devices in order to improve performance, resilience or availability.

To overcome such a drawback, the research community has developed the MultiPath Transmission Control Protocol (shortly MPTCP), which is an extension to the regular TCP protocol providing the ability to simultaneously transmit data of a single end-to-end connection across multiple paths between two devices. The MPTCP is defined, in IETF RFC-6824 "TCP Extensions for Multipath Operation with Multiple Addresses" (A.Ford et. al.) published on January, 2013 by the Internet Engineering Task Force.

In the framework of the present invention, it should be understood by:
- "multi-homed device or host", a device comprising at least two interfaces of communication (wired and/or wireless) - each interface having its own communication address (as for example an IP address) - in order to be able to exchange data packets with a remote communication device (possibly of a different type) in multipath mode. Consequently, the multi-homed device may involve a fixed or mobile telephone (possibly of a "smartphone" type), a fixed or portable computer, a Personal Digital Assistant (PDA), a content receiver (such as a decoder, a residential gateway or a Set-Top Box (STB)), or a network device such as content server;
- "communication path", a path connecting two communication devices (possibly multi-homed) thanks to two communication interfaces (one per device), so that a communication path shall be identified by the pair of communication addresses of the two corresponding communication interfaces; and
- "sub-flow", a flow of TCP packets operating over a single path, which forms part of a larger MPTCP connection. Such a sub-flow is started and terminated similarly to a regular TCP connection.

A MPTCP connection between a first and a second multi-homed devices is composed of a main regular TCP connection associated with a main communication path and one or more auxiliary TCP connections - linked to the main regular TCP connection - which are associated with auxiliary communication paths. Such a MPTCP connection continues to appear as a single TCP connection to the applications at both ends.

As already known, a multi-homed device - able to support the implementation of the MPTCP protocol (also named MPTCP capable) - has usually one fixed interface of communication assigned as the main interface to be used to initiate a MPTCP connection.

In order to benefit from the path diversity, at least one of the devices needs to be multi-homed, and both devices need to be MPTCP capable, otherwise the MPTCP connection falls back into a regular TCP connection and the path diversity cannot be used.

As usual with the introduction of a new Internet Protocol, the deployment is gradual and takes time before being widely used. Thus, there will be a long period of coexistence between devices being MPTCP capable and devices being only TCP capable, during which, the multipath conditions will not be fully met to be applied. As an illustration, a TCP video server - unable to carry out MPTCP - limits its service to the standard TCP connection and to a single path scenario, although the client device is equipped with several interfaces leading to a multipath opportunity.

The present invention proposes a solution to overcome at least the above mentioned disadvantage.

### SUMMARY OF THE INVENTION

The invention concerns a method for connecting a first host and a second host within at least one communication network through a relay module, which is remarkable in that it comprises, at the relay module, the steps of:
- capturing a first connection establishment request sent by the first host to establish a main connection with the second host;
- sending, to the second host, a second connection establishment request to establish an initial auxiliary connection between the relay module and the second host;
- receiving, from the second host, a first acknowledgment response;
- in case the first connection establishment request and the first acknowledgment response present the same multipath property, activating a forward mode to handle the traffic carried by the established main connection;
- in case the first connection establishment request and the first acknowledgment response present different multipath properties, activating a relay mode to handle the traffic carried by:
   ■ an additional auxiliary connection established between the first host and the relay module; and
   ■ the initial auxiliary connection established between the relay module and the second host.

Thus, thanks to the present invention, the method makes it possible to take advantage of the multipath architecture between, for instance, a multi-homed and multipath protocol capable first host and the relay module without requiring any multipath capabilities from a second host, and vice versa. The invention can be especially worthy when the performances of the first host interfaces are low (low bandwidth) and non-deterministic (as with wireless interfaces). In this case, the multipath architecture can provide both a higher capacity and a better reliability on the first host side by aggregating the bandwidth of the diverse interfaces.

According to an embodiment, the method further comprises, upon receipt of the first connection establishment request, the preliminary step of creating a first interface within the relay module to handle the initial auxiliary connection establishment.

Advantageously, said second connection establishment request may request the establishment of an initial auxiliary multipath connection. Thus, as an illustrative example, in case the first host is only standard TCP and the second host is multi-homed and MPTCP capable, the initial auxiliary connection may be multipath between the relay module and the second host.

Furthermore, the first connection establishment request and the first acknowledgment response can be stored in a context discovery unit of the relay module.

In another aspect of the present invention, said method can further comprise, when the forward mode has been activated, the steps of, at the relay module:
- dropping the first acknowledgment response received from the second host to abandon the initial auxiliary connection establishment;
- releasing the first connection establishment request toward the second host to establish a direct main connection;
- forwarding, to the first host, a second acknowledgment response sent by the second host in response to the previously sent connection establishment request, to establish the direct main connection.

In addition, said method can further comprise, when the relay mode has been activated, the steps of, at the relay module:
- processing the first connection establishment request to establish said additional auxiliary connection between the first host and the relay module. As an example, said additional auxiliary connection can be a multipath connection in case the first connection establishment request comprises a multipath property option;
- processing the first acknowledgment response to establish the initial auxiliary connection between the relay module and the second host. As an example, said initial auxiliary connection is a multipath connection in case the first acknowledgment response comprises a multipath property option;
- creating a link between the initial and additional auxiliary connections.

Moreover, said method can comprise an additional step of identifying the traffic carried by the initial and additional auxiliary connections as being in the relay mode and/or the traffic carried by the established main connection in the forward mode.

In a further aspect of the invention, the link between the initial and additional auxiliary connections can use a correspondence table.

Besides, the processing of the first connection establishment request can further comprise the steps of:
- creating a second interface within the relay module to handle the additional auxiliary connection with the first host;
- releasing said stored first connection establishment request toward the second interface;
- accepting the main connection initially requested by the first host to establish said additional auxiliary connection.

Moreover, the processing of the first acknowledgment response can further comprise the steps of:
- releasing said stored first acknowledgment response toward the first interface;
- accepting the initial auxiliary connection requested by the relay module to establish said initial auxiliary connection.

The present invention further concerns a relay module for connecting a first host and a second host, arranged within at least one communication network, said relay module being able to implement, at least partially, the method as specified in one of the preceding claims. According to the present invention, said relay module comprises:
- a capturing module for intercepting a first connection establishment request sent by the first host to establish a main connection with the second host;
- a communication module configured for:
   ■ sending, to the second host, a second connection establishment request to establish an initial auxiliary connection between the relay module and the second host;
   ■ receiving, from the second host, a first acknowledgment response;
- a context discovery unit configured for activating:
   ■ a forward mode to handle the traffic carried by the established main connection, in case the first connection establishment request and the first acknowledgment response present the same multipath property;
   ■ a relay mode to handle the traffic carried by:
      - an additional auxiliary connection established between the first host and the relay module; and
      - the initial auxiliary connection established between the relay module and the second host,
in case the first connection establishment request and the first acknowledgment response present different multipath properties.

In addition, said context discovery unit can be configured for storing the first connection establishment request and the first acknowledgment response and for determining their multipath properties.

Moreover, the relay module can further comprise:
- a traffic identification unit adapted to differentiate the traffic processed in the forward mode and the traffic processed in the relay mode, thanks to for instance an identification table;
- a relay application for relaying traffic carried by the initial and additional auxiliary connections between the first and second hosts, in the relay mode.

The present invention also concerns a computer program product downloadable from a communication network and/or recorded on a medium readable by computer and/or executable by a processor, comprising program code instructions for implementing the steps of the method as previously mentioned.

Besides, the present invention concerns a non-transitory computer-readable medium comprising a computer program product recorded thereon and capable of being run by a processor, including program code instructions for implementing the steps of the previously mentioned method.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 schematically depicts a diagram of an example of a network architecture comprising a relay module according to a preferred embodiment of the present invention;
- Figure 2 is a flow chart of a method implemented by the relay module of Figure 1 according to said preferred embodiment.

In the Figures, alike references refer to alike parts, unless otherwise indicated.

References disclosed in the description, the claims and the Figures may be provided independently or in any appropriate combination. Features may, where appropriate, be implemented in hardware, software, or a combination of the two.

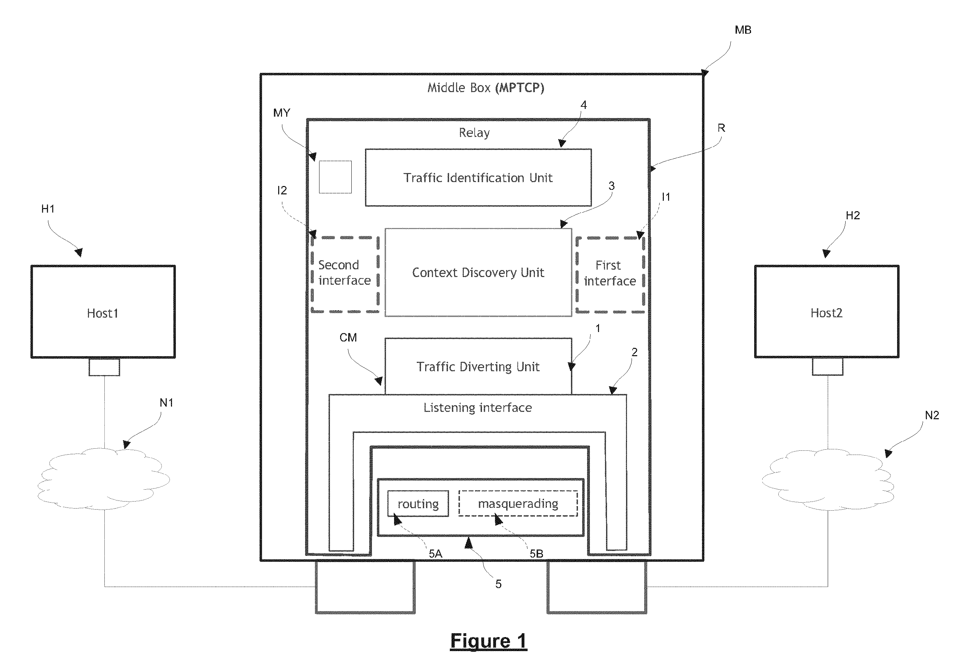

In addition, in Figure 1, the represented blocks are functional units, which can correspond to units physically separated or which can be included in a same physical unit. Namely, they could be developed in the form of software, hardware, or be implemented in one or several integrated circuits. For instance, these blocks or at least some of them can be grouped in a unique component or can constitute functionalities of the same software. In opposition, some blocks can eventually be divided into separate units.

### DETAILED DESCRIPTION OF PREFERRED EMBODIMENTS

According to a preferred embodiment, the present invention is depicted with regard to the standard TCP and to the multipath protocol MPTCP over the Internet Protocol. Naturally, the invention is not restricted to such a particular embodiment and other multipath protocols could of course be considered and implemented.

As depicted in Figure 1, the network architecture according to the preferred embodiment comprises a first host H1, a second host H2 and a multi-homed and MPCTP capable middle-box MB (e.g. a gateway). Hosts H1 and H2 wants to exchange data using TCP. It has to be noted that the "host" refers to a client (such a personal computer, a tablet, a smartphone, etc.), a server or a middle-box. Both hosts H1 and H2 can be either MPTCP capable or standard TCP (namely only TCP capable, but not MPTCP capable).

The host H1 - connected to the middle-box MB through a first network N1 (as a home network) - wants to connect to the host H2 through a second network N2 (as the Internet network). The first network N1 is connected to the second network N2 thanks to the middle-box MB. Obviously, in a variant, the connection might be initiated by second host H2.

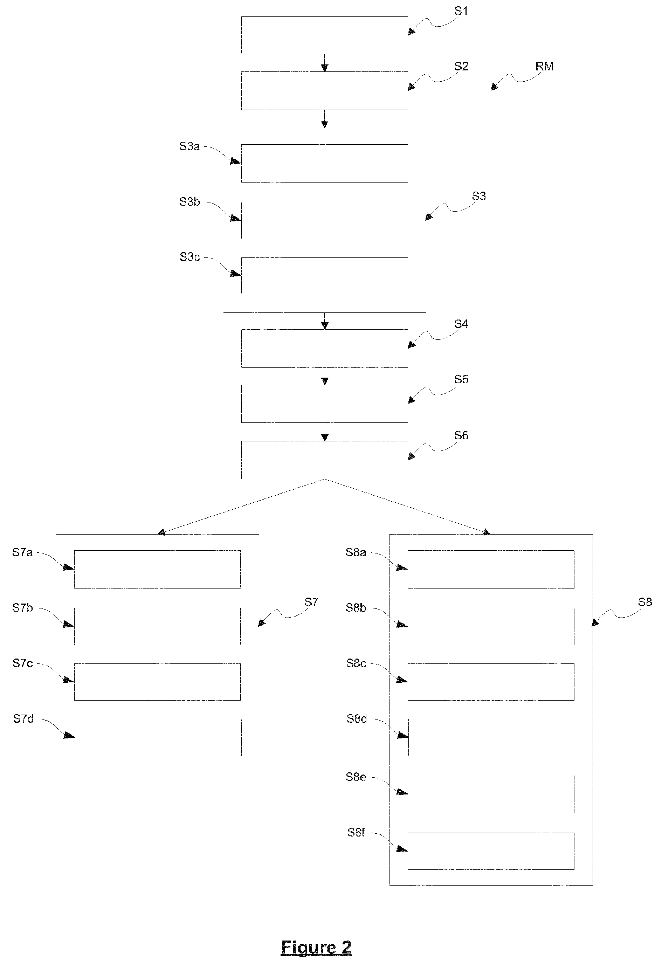

To take into account all host combinations (standard TCP, MPTCP capable), a relay module R - arranged for example in the Middle-Box MB - performs a relay mechanism RM (hereinafter described in reference to Figure 2), which proposes two working modes: a FORWARD mode and a RELAY mode.

The FORWARD mode is activated when both hosts H1 and H2 present the same multipath capabilities, i.e. both hosts H1 and H2 are MPTCP-capable or both hosts H1, H2 include a standard TCP stack. In these conditions, the relay module R works as a transparent bridge and forwards the traffic without specific processing to avoid any performance degradation.

The RELAY mode is activated when the hosts H1 and H2 show different multipath capabilities (one host is MPTCP-capable, and the other host is only standard TCP), the relay module R switches to the RELAY mode and relay the traffic between both hosts H1 and H2.

As already known, since MPTCP is an extension to TCP, an MPTCP connection is initiated using the same process as a normal TCP connection, namely the three-way handshake (SYN, SYN/ACK, ACK). An MPTCP host is then a host that initiates a TCP connection by sending a SYN to a remote host using one of the available paths. In order to enable an additional path, a new TCP three-way handshake is carried out.

When dealing with MPTCP capable hosts, every TCP packet, belonging to the MPTCP connection, embeds specific data included in the header of the TCP segment, in the "option" field. A MPTCP option is identified with a "kind" value equal to 30 (cf RFC6824, january 2014, table1). Besides, a "subtype" field is used to define more specifically the MPTCP option. In the context of the SYN, SYN/ACK and ACK packets, these options have been designed to check whether the remote host supports MPTCP. They also allow the hosts to exchange some information to secure the establishment of additional subflows along the available paths. A MPTCP subflow is defined by a pair of IP addresses, one belonging to the first host H1 (e.g. a client), the other one to the second host H2 (e.g. a server).

When a MPTCP connection is initiated, the standard TCP three-way handshake is performed with SYN, SYN/ACK and ACK packets carrying a MultiPath Capable option, named MP_CAPABLE, identified by a subtype value equal to 0. This option declares that its sender is capable of performing multipath TCP.

Next, in order to set up an additional path, a subflow is associated with the initiated MPTCP connection. A new TCP three-way handshake is then carried out with the SYN, SYN/ACK and ACK packets carrying the MultiPath Join option, named MP_JOIN, identified by a subtype value equal to 1.

As shown on Figures 1 and 2, to manage the TCP traffic between both hosts H1 and H2, the relay module R implements the following mechanism RM, thanks to a relay application stored for instance in a memory MY of the relay module R (which might correspond to a memory of the middle-box MB).In a step S1, the relay module R diverts (or captures) an identified traffic received, thanks to a traffic diverting unit 1, toward a listening interface 2. The diverted traffic may be all the SYN and SYN/ACK packets exchanged and all TCP packets identified as being in the RELAY mode. In other words, the traffic diverting unit 1 diverts traffic according to the packet type and/or according to the connection mode (RELAY mode or FORWARD mode) in which the traffic is exchanged.

As shown on Figure 1, the traffic diverting unit 1 and listening interface 2 may define a capturing module CM.

In a step S2, the listening interface 2 of the relay module R analyses the diverted traffic to identify a first connection establishment request (standard SYN packet or MPTCP SYN packet with MP_CAPABLE option (subtype=0x0)) coming from one of the hosts H1, H2. As an example, host H1 sends said first connection establishment request toward host H2. If such a first connection establishment request from first host H1 is identified, the listening interface 2 forwards it to a context discovery unit 3 of the relay module R.

In a step S3, upon receipt of such a first connection establishment request from first host H1, the context discovery unit 3 of the relay module R:
- stores (step S3a) the second host H2 IP address, the port originally requested by the first host H1 and the multipath property ("SP" Single Path or "MP" MultiPath) of said first connection establishment request;
- retains (step S3b) said first connection establishment request; and
- creates (step S3c) a first interface I1 (such as a MPTCP socket) to connect to the second host H2 through an initial auxiliary connection.

In a step S4, the first interface I1 attempts to create a new MPTCP connection toward the second host H2 by sending a second connection establishment request (SYN packet carrying the MP_CAPABLE option) to establish an initial multipath auxiliary connection between the relay module R and the second host H2.

In a step S5, when a first acknowledgment response (SYN/ACK packet) is received by the relay module R and forwards to the context discovery unit 3 by both the traffic diverting unit 1 and listening interface 2, said context discovery unit 3 checks the multipath property (SP or MP) of said first response in order to determine whether both hosts H1, H2 present the same multi-path capabilities or not.

In a step S6, the relay module R activates the FORWARD mode, in case both hosts H1 and H2 present the same multipath capabilities (i.e. both are MPTCP capable or both are TCP only), or the RELAY mode, in case both hosts H1 and H2 have different multipath capabilities (i.e. one host H1, H2 is multipath capable and the other host H2, H1 is only standard TCP).

The relay module R further comprises a traffic identification unit 4 able to differentiate the traffic processed in the FORWARD mode and in the RELAY mode, based on an identification table (detailed hereinafter) which is built during the connection establishment phase.

Once the FORWARD mode has been activated, in a step S7, the relay module R:
- closes (step S7a) the first interface I1 connected to the second host H2 (resetting the now useless connection between the relay module and the second host H2);
- drops (step S7b) the first acknowledgment response received from the second host H2 to abandon the initial auxiliary connection establishment;
- releases (step S7c) the first connection establishment request toward the second host H2 in the path of the middle-box MB packet processing, without any marking;
- forwards (step S7d):
   ■ to the first host H1, a second acknowledgment response (SYN/ACK packet) sent by the second host H2 to establish the direct main connection; and
   ■ to the second host H2, the corresponding establishment acknowledgment response (ACK packet) sent by the first host H1.

As a consequence, in said FORWARD mode, said first connection establishment request and the traffic exchanged on the corresponding connection follow the standard forwarding path of the middle-box MB, identified by the reference 5 on Figure 1 (through, for instance, a routing module 5A and a masquerading module 5B).

In case a further connection establishment request carrying the MP_JOIN option (SYN packet with subtype = 0x1) is received on the middle-box MB and the subflow is identified (by means of the identification table) as belonging to an MPTCP session currently being in the FORWARD mode, the traffic identification unit 4 arranged in the relay module R is then configured to identify (e.g. thanks to the identification table hereinafter depicted) the traffic carried by said subflow (initiated by the SYN MP_JOIN packet) as being in the FORWARD mode. Said further connection establishment request is then released by the listening interface 2 to follow the middle-box packet processing. In that case, if a data packet is received, it is not diverted, since the relay module R is in the FORWARD mode, it only follows the standard middle-box packet processing path.

When the RELAY mode has been activated, in a step S8, the relay module R:
- releases (step S8a) the first acknowledgment response (SYN/ACK packet) to be processed by the first interface I1;
- accepts (step S8b) the initial auxiliary connection requested by the relay module R to establish the initial auxiliary connection;
- creates (step S8c) a second interface I2 to handle an additional auxiliary connection between the first host H1 and the relay module R and;
- releases (step S8d) said stored first connection establishment request (SYN packet) toward the second interface I2;
- accepts (step S8e) the main connection initially requested by the first host H1 in order to establish said additional auxiliary connection. In other words, the main connection requested by the first host H1 to exchange with the second host H2 is substituted by the additional auxiliary connection between the first host H1 and the relay module R;
- creates (step S8f) a link between the first and second interfaces I1, I2 using, for instance, a correspondence table.

The traffic identification unit 4 of the relay module R can identify the traffic carried by the initial and additional auxiliary connections as being in the RELAY mode based on the identification table. More generally, the traffic identification unit 4 might be able to differentiate the traffic processed in the FORWARD mode and the traffic processed in the RELAY mode, based on said identification table.

In other words, in this RELAY mode, the traffic exchanged on the initial auxiliary connection managed by the first interface I1 is identified, by the traffic identification unit 4 of the relay module R, as being in the RELAY mode. The first connection establishment request is released to follow its path up to the listening interface 2 which accepts said first connection request and creates the second interface I2 (e.g. a TCP socket) to deal with the first host's interface I1. The traffic exchanged on the established additional auxiliary connection is identified by the traffic identification unit 4 and is then routed by the traffic diverting unit 1 toward the relay application of the relay module R, which forwards the data between both first and second interfaces I1, I2.

In case a further connection establishment request carrying the MP_JOIN option (SYN packet with subtype = 0x1) is received on the middle-box MB and the subflow is identified (by means of the identification table) as belonging to an MPTCP session currently being in the RELAY mode, the traffic identification unit of the relay module R is then configured to identify the traffic carried by said subflow (initiated by the SYN MP_JOIN packet) as being in the RELAY mode. Said further connection establishment request is diverted toward the relay application and the TCP handshake can be completed to open the corresponding subflow.

In particular, when a data packet is received from the first host H1 by the middle-box MB, it is diverted toward the created second interface I2 of the relay module R. Then, said data packet is relayed from the second interface I2 to the first interface I1 before reaching the second host H2, thanks to the correspondence table used by the relay application. When a data packet is received from the second host H2 by the middle-box MB, it is diverted toward the first created interface I1 of the relay module R. Then, said data packet is relayed from the first interface I1 to the second interface I2 before reaching the second host H2.

In case a "close connection" packet (FIN packet for TCP, DATA_FIN packet for MPTCP) is received by the middle-box MB, the first and second interfaces I1 and I2 are closed by the relay module R and the correspondence table is reset.

Besides, to keep track of which connections have to be forwarded or relayed, the relay module R builds a lookup table when a connection is established. This identification table (not shown on the Figures) is initially empty and filled by the context discovery unit 3. It is then consulted by the traffic identification unit 4 upon receipt of data packets. An example of such an identification table is given hereinafter:

| *Source address:port* | *Source token* | *Destination address:port* | *Destination token* | *Mode of operation (FWD*/*RELAY)* |
|---|---|---|---|---|
| *192.168.1.100: 5002* | | *74.125.26.94:80* | | *RELAY* |
| *192.168.1.100: 6234, 192.168.1.100: 6434* | *S_tok1* | *130.104.230.45:80, 130.104.230.46:80* | *D_tok1* | *FWD* |

### Identification table

The source and destination address and ports columns allow quick lookup of established connection and selection of the appropriate processing for each received packet. For normal TCP connections, the source and destination tokens do not exist and are left blank. For MPTCP connections, the source token is the hash of the destination's key (as sent by the destination host in the SYN/ACK packet) and the destination token is the hash of the source's key (sent by the source host in the SYN packet). This pair of tokens uniquely identifies an MPTCP connection at both ends. These tokens are reused by the MPTCP protocol for the establishment of subsequent subflows and allow looking up the corresponding MPTCP master flow. From the relay's perspective, tracking which subflows belong to which master flow is required to determine the mode of operation for each subflow.

For the relay to keep track of the addition of new subflows, two distinct situations can preferably be handled:
- addition of a new source address: when a source (e.g. the first host H1) having multiple interfaces decides to add an interface to an existing MPTCP session, it issues a MPTCP SYN packet carrying the MP_JOIN option with a token identifying the MPTCP session at the destination (for example "S_tok1 ") towards the destination host (e.g. second host H2) identified by its IP address. When its sees that packet, the relay module R looks up the S_tok1 and destination address pair to retrieve the mode of operation selected for that MPTCP session and finally adds a line to the identification table, recording the additional source address together with the corresponding tokens and mode of operation (RELAY mode, FORWARD mode);
- addition of a new destination address: the relay module R needs to implement a two steps process. Firstly, the relay module R tracks ADD_ADDR messages which are attached as options to data packet and allow the destination host to indicate the availability of an additional IP address. Upon receipt of such messages, it records the address in the identification table together with associated MPTCP session. Secondly, upon receipt of a MPTCP SYN packet with the MP_JOIN option, if the destination address matches a previously recorded (added) address and the source token matches a known token (e.g. S_tok1), then the relay module R identifies the subflow as belonging to the MPTCP session and records the associated source and destination ports.

It has to be noted that the present invention may, in an illustrative but non limitative example, be implemented in a middle-box which is a router running on a linux Personal Computer integrating an MPTCP stack. The first host (e.g. a client) and the second host (e.g. a server) run on Linux Personal Computers integrating the MPTCP or the standard TCP stack. The router is connected, on one side, to the client PC through up to two 100M Ethernet interfaces and, on the other side, to the server PC via up to two 100M Ethernet interfaces.

In addition, in the above mentioned preferred embodiment, the relay module R is integrated in the middle-box MB, as a hardware and/or software module. Obviously, in an alternative, the relay module might be an independent hardware module connected to the first and second hosts, directly or through a middle-box.

Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system", the whole being embedded in a single host or in many hosts that are connected together by any kind of means. Furthermore, aspects of the present principles can take the form of a computer readable storage medium. Any combination of one or more computer readable storage medium(s) may be utilized.

References disclosed in the description, the claims and the drawings may be provided independently or in any appropriate combination. Features may, where appropriate, be implemented in hardware, software, or a combination of the two. Reference numerals appearing in the claims are by way of illustration only and shall have no limiting effect on the scope of the claims.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

In the claims hereof, any element expressed as a means for performing a specified function (e.g. traffic diverting unit 1, listening interface 2, context discovery unit 3, first and second interfaces I1, I2, traffic identification unit 4, relay application etc.) is intended to encompass any way of performing that function including, for example, a) a combination of circuit elements (for instance one or more processors) that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

## Claims

1. A method for connecting a first host (H1) and a second host (H2) within at least one communication network (N1, N2) through a relay module (R), **characterized in that** the method comprises, at the relay module (R), the steps of:
- capturing (S1, S2) a first connection establishment request sent by the first host (H1) to establish a main connection with the second host (H2);
- sending (S4), to the second host (H2), a second connection establishment request to establish an initial auxiliary connection between the relay module (R) and the second host (H2);
- receiving (S5), from the second host (H2), a first acknowledgment response;
- in case the first connection establishment request and the first acknowledgment response present the same multipath property, activating (S6) a forward mode to handle the traffic carried by the established main connection;
- in case the first connection establishment request and the first acknowledgment response present different multipath properties, activating (S6) a relay mode to handle the traffic carried by:
■ an additional auxiliary connection established between the first host (H1) and the relay module (R); and
■ the initial auxiliary connection established between the relay module (R) and the second host (H2).

2. Method according to claim 1, further comprising, upon receipt of the first connection establishment request, the preliminary step of creating a first interface (I1) within the relay module (R) to handle the initial auxiliary connection establishment.

3. Method according to claim 1 or 2, wherein said second connection establishment requests the establishment of an initial auxiliary multipath connection.

4. Method according to any of claims 1 to 3, wherein the first connection establishment request and the first acknowledgment response are stored (S5) in a context discovery unit of the relay module (R).

5. Method according to claim 4, further comprising, when the forward mode has been activated, the steps of, at the relay module (R):
- dropping (S7b) the first acknowledgment response received from the second host (H2) to abandon the initial auxiliary connection establishment;
- releasing (S7c) the first connection establishment request toward the second host (H2);
- forwarding (S7d), to the first host (H1), a second acknowledgment response sent by the second host (H2) in response to the previously sent connection establishment request, to establish the direct main connection.

6. Method according to claim 4, further comprising, when the relay mode has been activated, the steps of, at the relay module (R):
- processing the first connection establishment request to establish said additional auxiliary connection between the first host (H1) and the relay module (R);
- processing the first acknowledgment response to establish the initial auxiliary connection between the relay module (R) and the second host (H2);
- creating (S8f) a link between the initial and additional auxiliary connections.

7. Method according to claim 6, wherein the link between the initial and additional auxiliary connections uses a correspondence table.

8. Method according to claim 6 or 7, wherein the processing of the first connection establishment request further comprises the steps of:
- creating (S8c) a second interface (I2) within the relay module (R) to handle the additional auxiliary connection with the first host (H1);
- releasing (S8d) said stored first connection establishment request toward the second interface (I2);
- accepting (S8e) the main connection initially requested by the first host (H1) to establish said additional auxiliary connection.

9. Method according to any of claims 6 to 8, wherein the processing of the first acknowledgment response further comprises the steps of:
- releasing (S8a) said stored first acknowledgment response toward the first interface (I1);
- accepting (S8b) the initial auxiliary connection requested by the relay module (R) to establish said initial auxiliary connection.

10. Relay module for connecting a first host (H1) and a second host (H2), arranged within at least one communication network (N1, N2), said relay module (R) being able to implement, at least partially, the method as specified in one of the preceding claims, **characterized in that** it comprises:
- a capturing module (CM) for intercepting a first connection establishment request sent by the first host (H1) to establish a main connection with the second host (H2);
- a communication module (I1) configured for:
■ sending, to the second host (H2), a second connection establishment request to establish an initial auxiliary connection between the relay module (R) and the second host (H2);
■ receiving, from the second host (H2), a first acknowledgment response;
- a context discovery unit (3) configured for activating:
■ a forward mode to handle the traffic carried by the established main connection, in case the first connection establishment request and the first acknowledgment response present the same multipath property;
■ a relay mode to handle the traffic carried by:
- an additional auxiliary connection established between the first host (H1) and the relay module (R); and
- the initial auxiliary connection established between the relay module (R) and the second host (H2),
in case the first connection establishment request and the first acknowledgment response present different multipath properties.

11. Relay module according to claim 10, wherein the context discovery unit (3) is further configured for storing the first connection establishment request and the first acknowledgment response and for determining their multipath properties.

12. Relay module according to claim 10 or 11, further comprises a traffic identification unit (4) adapted to differentiate the traffic processed in the forward mode and the traffic processed in the relay mode.

13. Relay module according to any of claims 10 to 12, further comprises a relay application for relaying traffic carried by the initial and additional auxiliary connections between the first and second hosts (H1, H2), in the relay mode.

14. Computer program product downloadable from a communication network and/or recorded on a medium readable by computer and/or executable by a processor, comprising program code instructions for implementing the steps of a method according to at least one of claims 1 to 9.

15. Non-transitory computer-readable medium comprising a computer program product recorded thereon and capable of being run by a processor, including program code instructions for implementing the steps of a method according to at least one of claims 1 to 9.
